# EUROPÄISCHE PATENTSCHRIFT

(11) **EP 2 758 651 B1**
(45) Veröffentlichungstag und Bekanntmachung des Hinweises auf die Patenterteilung: **28.12.2016**
(21) Anmeldenummer: 12778204.3
(22) Anmeldetag: 14.09.2012
(51) Int. Cl.: F02F 3/18

(54) **KOLBEN FÜR EINEN VERBRENNUNGSMOTOR UND VERFAHREN ZU SEINER HERSTELLUNG**
PISTON FOR AN INTERNAL COMBUSTION ENGINE AND METHOD FOR PRODUCING SAME
PISTON POUR MOTEUR À COMBUSTION INTERNE ET PROCÉDÉ DE FABRICATION CORRESPONDANT

(30) Priorität: 20.09.2011 DE 102011113800
(43) Veröffentlichungstag der Anmeldung: 30.07.2014
(73) Patentinhaber: MAHLE International GmbH, 70376 Stuttgart (DE)
(72) Erfinder: BISCHOFBERGER, Ulrich, 73732 Esslingen (DE)
(74) Vertreter: BRP Renaud & Partner mbB Rechtsanwälte Patentanwälte Steuerberater
(86) Internationale Anmeldenummer: PCT/DE2012/000919
(87) Internationale Veröffentlichungsnummer: WO 2013/041076

(56) Entgegenhaltungen:
- DE-C- 726 685
- DE-C- 762 820
- FR-A3- 2 901 577
- GB-A- 517 713
- IT-B- 1 057 365
- US-A- 1 841 796
- US-A1- 2005 087 153

## Beschreibung

Die vorliegende Erfindung betrifft einen Kolben für einen Verbrennungsmotor, mit einem Kolbenkopf und einem Kolbenschaft, wobei der Kolbenkopf eine umlaufende Ringpartie sowie im Bereich der Ringpartie einen umlaufenden Kühlkanal aufweist, wobei der Kolbenschaft mit Nabenbohrungen versehene Kolbennaben aufweist, die über Nabenanbindungen an der Unterseite des Kolbenkopfes angeordnet sind, wobei die Kolbennaben über Laufflächen miteinander verbunden sind.

Aus der DE 726 685 C ist ein gattungsgemäßer Kolben für einen Verbrennungsmotor bekannt, mit einem Kolbenkopf und einem Kolbenschaft, wobei der Kolbenkopf eine umlaufende Ringpartie sowie im Bereich der Ringpartie einen umlaufenden Kühlkanal aufweist und wobei der Kolbenschaft mit Nabenbohrungen versehene Kolbennaben aufweist, die über Nabenanbindungen an der Unterseite des Kolbenkopfes angeordnet sind. Die Kolbennaben sind über Laufflächen miteinander verbunden, wobei mindestens eine nach außen verschlossene Bohrung vorgesehen ist, die zwischen einer Lauffläche und einer Nabenbohrung angeordnet ist.

Aus der FR 2 901 577 A3 ist ein weiterer Kolben bekannt.

In modernen Verbrennungsmotoren sind die Kolben im Bereich der Kolbenböden immer höheren Temperaturbelastungen ausgesetzt. Dies führt im Betrieb zu erheblichen Temperaturunterschieden zwischen dem Kolbenkopf und dem Kolbenschaft. Damit ist auch das Einbauspiel der Kolben im kalten Motor unterschiedlich zum Einbauspiel im warmen Motor.

Die Aufgabe der vorliegenden Erfindung besteht darin, einen gattungsgemäßen Kolben so weiterzuentwickeln, dass sich im Betrieb eine gleichmäßigere Temperaturverteilung zwischen dem Kolbenkopf und dem Kolbenschaft einstellt.

Die Lösung besteht darin, dass vier nach außen verschlossene Bohrungen vorgesehen ist, die zwischen einer Lauffläche und einer Nabenbohrung angeordnet sind, um eine besonders gleichmäßige Temperaturverteilung im Kolben zu erreichen, dass die Bohrungen in den Kühlkanal münden und dass der Kühlkanal und die Bohrungen ein Kühlmittel in Form eines niedrig schmelzenden Metalls oder einer niedrig schmelzenden Metalllegierung enthalten.

Der erfindungsgemäße Kolben zeichnet sich dadurch aus, dass die im Bereich des Kolbenbodens erzeugte Wärme über den Kolbenkopf in den Kolben geleitet und über die vergleichsweise großflächigen Laufflächen abgegeben wird. Damit wird im Betrieb eine gleichmäßigere Wärmeverteilung über den gesamten Kolben erreicht. Ferner wird eine effektivere Kühlung des gesamten Kolbens erzielt.

Wenn zusätzlich die Unterseite des Kolbenkopfes mit Kühlöl gekühlt wird, wird die Bildung von Ölkohle vermieden. Insgesamt ist außerdem der Kühlölverbrauch reduziert.

Durch die zusätzliche Erwärmung des Bereiches zwischen Kolbennabe und Kolbenschaft wird eine zusätzliche thermische Ausdehnung des Kolbenschafts bewirkt und dadurch das Warmspiel zwischen Kolben und Zylinder reduziert. Dies ist insbesondere dann von Vorteil, wenn ein Kurbelgehäuse aus einem Leichtmetallwerkstoff, bspw. einem aluminiumbasierten Werkstoff, mit einem höheren Wärmeausdehnungskoeffizienten als dem des Kolbenwerkstoffs verwendet wird.

Vorteilhafte Weiterbildungen ergeben sich aus den Unteransprüchen.

Niedrig schmelzende Metalle, die zur Verwendung als Kühlmittel geeignet sind, sind insbesondere Natrium oder Kalium. Als niedrig schmelzende Metalllegierungen können insbesondere Galinstan®-Legierungen, niedrig schmelzende Bismut-Legierungen und Natrium-Kalium-Legierungen eingesetzt werden.

Als sog. Galinstan®-Legierungen werden Legierungssysteme aus Gallium, Indium und Zinn bezeichnet, die bei Raumtemperatur flüssig sind. Diese Legierungen bestehen aus 65 Gew.-% bis 95 Gew.-% Gallium, 5 Gew.-% bis 26 Gew.-% Indium und 0 Gew.-% bis 16 Gew.-% Zinn. Bevorzugte Legierungen sind bspw. solche mit 68 Gew.-% bis 69 Gew.-% Gallium, 21 Gew.-% bis 22 Gew.-% Indium und 9,5 Gew.-% bis 10,5 Gew.-% Zinn (Schmp. -19°C), 62 Gew.-% Gallium, 22 Gew.-% Indium und 16 Gew.-% Zinn (Schmp.10,7°C) sowie 59,6 Gew.-% Gallium, 26 Gew.-% Indium und 14,4 Gew.%- Zinn (ternäres Eutektikum, Schmp. 11°C).

Niedrig schmelzende Bismut-Legierungen sind zahlreich bekannt. Dazu gehören bspw. LBE (eutektische Bismut-Blei-Legierung, Schmp. 124°C), Roses Metall (50 Gew.-% Bismut, 28 Gew.-% Blei und 22 Gew.-% Zinn, Schmp. 98°C), Orionmetall (42 Gew.-% Bismut, 42 Gew.-% Blei und 16 Gew.-% Zinn, Schmp. 108°C); Schnelllot (52 Gew.-% Bismut, 32 Gew.-% Blei und 16 Gew.-% Zinn, Schmp. 96°C), d'Arcets-Metall (50 Gew.-% Bismut, 25 Gew.-% Blei und 25 Gew.-% Zinn), Woodsches Metall (50 Gew.-% Bismut, 25 Gew.-% Blei, 12,5 Gew.-% Zinn und 12,5 Gew.-% Cadmium, Schmp. 71 °C), Lipowitzmetall (50 Gew.-% Bismut, 27 Gew.-% Blei, 13 Gew.-% Zinn und 10 Gew.-% Cadmium, Schmp. 70°C), Harpers Metall (44 Gew.-% Bismut, 25 Gew.-% Blei, 25 Gew.-% Zinn und 6 Gew.-% Cadmium, Schmp. 75°C), Cerrolow 117 (44,7 Gew.-% Bismut, 22,6 Gew.-% Blei, 19,1 Gew.-% Indium, 8,3 Gew.-% Zinn und 5,3 Gew.-% Cadmium, Schmp. 47°C); Cerrolow 174 (57 Gew.-% Bismut, 26 Gew.-% Indium, 17 Gew.-% Zinn, Schmp. 78,9°C), Fields Metall (32 Gew.-% Bismut, 51 Gew.-% Indium, 17 Gew.-% Zinn, Schmp. 62°C) sowie die Walkerlegierung (45 Gew.-% Bismut, 28 Gew.-% Blei, 22 Gew.-% Zinn und 5 Gew.-% Antimon).

Geeignete Natrium-Kalium-Legierungen können 40 Gew.-% bis 90 Gew.-% Kalium enthalten. Besonders geeignet ist die eutektische Legierung NaK mit 78 Gew.-% Kalium und 22 Gew.- Natrium (Schmp. -12,6°C).

Das Kühlmittel kann zusätzlich Lithium und/oder Lithiumnitrid enthalten. Falls beim Befüllen Stickstoff als Schutzgas verwendet wird, kann dieses mit dem Lithium zu Lithiumnitrid abreagieren und auf diese Weise aus dem Kühlkanal entfernt werden.

Das Kühlmittel kann ferner Natriumoxide und/oder Kaliumoxide enthalten, falls während des Befüllens ggf. vorhandene trockene Luft mit dem Kühlmittel reagiert hat.

Mindestens eine Bohrung ist zweckmäßigerweise mittels eines Verschlusselements verschlossen, das bspw. in die Bohrung eingepresst oder mit dem Kolben verschweißt ist, um zu vermeiden, dass das Kühlmittel austritt.

Die Menge des im Kühlkanal bzw. in der mindestens einen Bohrung aufgenommenen Kühlmittels hängt von seiner Wärmeleitfähigkeit und dem Grad der gewünschten Temperatursteuerung ab. Vorzugsweise weist das Kühlmittel eine Füllhöhe bis zur halben Höhe des Kühlkanals auf, um einen Shaker-Effekt und damit eine besonders wirksame Wärmeverteilung im Kolben zu erzielen.

Insbesondere wenn der Anteil der Verbrennungswärme, welcher während des Motorbetriebs in den Kolben abfließt, begrenzt werden soll, kann dies mit der Menge an eingefülltem Kühlmittel gesteuert werden. Es hat sich gezeigt, dass mitunter bereits eine Füllung von 3% bis 5% des Kühlkanalvolumens mit dem Kühlmittel ausreicht, um die Funktion des Kolbens sicherzustellen.

Der erfindungsgemäße Kolben besteht vorzugsweise im Wesentlichen aus einem eisenbasierten Werkstoff, bspw. einem Werkstoff aus der Gruppe umfassend ausscheidungshärtende Stähle, Vergütungsstähle, hochfestes Gusseisen und Gusseisen mit Lamellengraphit.

Ein Ausführungsbeispiel der vorliegenden Erfindung wird im Folgenden anhand der beigefügten Zeichnungen näher erläutert. Es zeigen in einer schematischen, nicht maßstabsgetreuen Darstellung:
- Figur 1: ein Ausführungsbeispiel eines erfindungsgemäßen Kolbens, teilweise im Schnitt;
- Figur 2: einen Schnitt entlang der Linie II - II in Figur 1;
- Figur 3: einen Schnitt entlang der Linie III - III in Figur 1;
- Figur 4: eine vergrößerte Teildarstellung aus Figur 3.

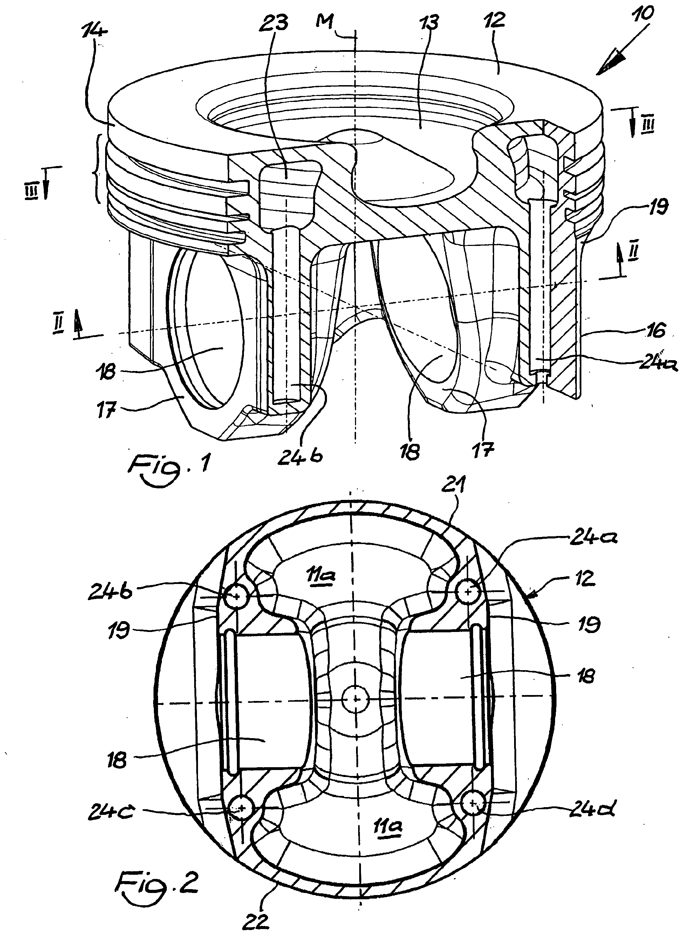

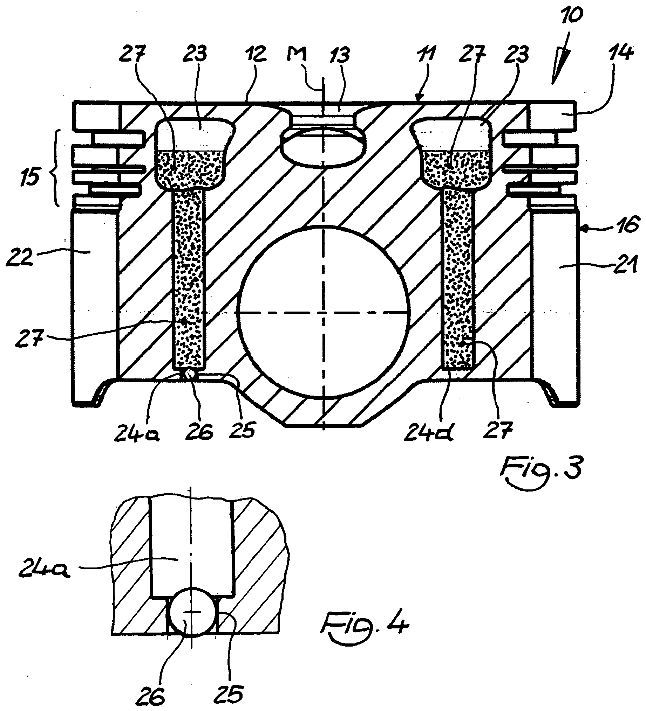

Die Figuren 1 bis 4 zeigen ein Ausführungsbeispiel eines erfindungsgemäßen Kolbens 10. Der Kolben 10 kann ein einteiliger oder mehrteiliger Kolben sein. Der Kolben 10 kann aus einem eisenbasierten Werkstoff und/oder einem Leichtmetallwerkstoff hergestellt sein, wobei der eisenbasierte Werkstoff bevorzugt ist.

Die Figuren 1 bis 3 zeigen beispielhaft einen einteiligen Kastenkolben 10. Der Kolben 10 weist einen Kolbenkopf 11 mit einem eine Verbrennungsmulde 13 aufweisenden Kolbenboden 12, einem umlaufenden Feuersteg 14 und einer Ringpartie 15 zur Aufnahme von Kolbenringen (nicht dargestellt) auf. In Höhe der Ringpartie 15 ist ein umlaufender Kühlkanal 23 vorgesehen. Der Kolben 10 weist ferner einen Kolbenschaft 16 mit Kolbennaben 17 und Nabenbohrungen 18 zur Aufnahme eines Kolbenbolzens (nicht dargestellt) auf. Die Kolbennaben 17 sind über Nabenanbindungen 19 mit der Unterseite 11a des Kolbenkopfes verbunden. Die Kolbennaben 17 sind über Laufflächen 21, 22 miteinander verbunden (vgl. insbesondere Figur 2).

Der Kolbenschaft 16 weist im Ausführungsbeispiel vier Bohrungen 24a, 24b, 24c, 24d auf. Die Bohrungen 24a-d verlaufen im Ausführungsbeispiel in etwa axial und parallel zur Kolbenmittelachse M. Die Bohrungen 24a-d können aber auch geneigt unter einem Winkel zur Kolbenmittelachse M verlaufen. Die Bohrungen 24a-d sind zwischen einer Lauffläche 21, 22 und einer Nabenbohrung 18 angeordnet. Die Bohrungen 24a-d münden in den Kühlkanal 23.

Im Ausführungsbeispiel kann der Kolbens 10 bspw. in an sich bekannter Weise gegossen sein, wobei der Kühlkanal 23 und die Bohrungen 24a-d in an sich bekannter Weise mittels eines Salzkerns eingebracht werden können. Wesentlich ist, dass zumindest eine Bohrung 24a eine Öffnung 25 nach außen aufweist. Erfindungsgemäß wird das Kühlmittel 27, nämlich ein niedrig schmelzendes Metall oder eine niedrig schmelzende Metalllegierung, wie sie weiter oben beispielhaft aufgezählt sind, durch die Öffnung 25 in die Bohrung 24a gefüllt. Von dort aus verteilt sich das Kühlmittel 27 im Kühlkanal 23 sowie in den weiteren Bohrungen 24b-d. Die Öffnung 25 wird anschließend dicht verschlossen, im Ausführungsbeispiel mittels einer eingepressten Stahlkugel 26. Die Öffnung 25 kann auch bspw. durch Aufschweißen eines Deckels oder Einpressen einer Kappe verschlossen werden (nicht dargestellt).

Die Größe der Bohrungen 24a-d und die Füllmenge des Kühlmittels 27 richten sich nach der Größe und dem Werkstoff des Kolbens 10. Durchschnittlich werden etwa. 10g bis 40g Kühlmittel 27 pro Kolben 10 benötigt. Die Kühlleistung kann über die Menge des zugegebenen Kühlmittels 27 unter Berücksichtigung seines Wärmeleitfähigkeitskoeffizienten gesteuert werden. Bspw. ist ein Füllstand im Kühlkanal 23 geeignet, der in etwa der halben Höhe des Kühlkanals 23 entspricht. In diesem Fall kann im Betrieb der an sich bekannte Shaker-Effekt für eine besonders wirksame Wärmeverteilung im Kolben zusätzlich genutzt werden. Für Natrium als Kühlmittel 27 mit einer Temperatur im Betrieb von 220°C ergibt sich bei einer Kühlleistung von 350kW/m² eine maximale Oberflächentemperatur des Kolbens 10 von etwa 260°C.

Zusätzlich kann die Unterseite 11a des Kolbenkopfes 11 durch Anspritzen mit Kühlöl gekühlt werden.

Zum Befüllen der Bohrung 24a wird durch die Öffnung 25 eine Lanze eingeführt und mittels Stickstoff oder mittels eines anderen geeigneten Inertgases oder mittels trockener Luft gespült. Zur Einführung des Kühlmittels 27 wird dieses unter Schutzgas (bspw. Stickstoff, Inertgas oder trockene Luft) durch die Öffnung 25 geleitet, so dass das Kühlmittel 27 in die Bohrung 24a bzw. den Kühlkanal 23 aufgenommen wird.

Ein weiteres Verfahren zum Befüllen der Bohrung 24a zeichnet sich dadurch aus, dass nach dem Spülen mit Stickstoff, Inertgas oder trockener Luft die Bohrungen 24a-d und der Kühlkanal 23 evakuiert werden und das Kühlmittel 27 im Vakuum eingebracht wird. Damit kann sich das Kühlmittel 27 leichter im Kühlkanal 23 hin und her und in den Bohrungen 24a-d hinein und hinaus bewegen, da es nicht durch vorhandenes Schutzgas behindert wird.

Eine andere Möglichkeit, das Schutzgas aus dem Kühlkanal 23 bzw. den Bohrungen 24a-d zu entfernen, besteht darin, dass Stickstoff oder trockene Luft (d.h. im Wesentlichen eine Mischung aus Stickstoff und Sauerstoff) als Schutzgas zu verwenden und dem Kühlmittel 27 eine kleine Menge Lithium zuzusetzen, erfahrungsgemäß etwa 1,8mg bis 2,0mg Lithium pro Kubikzentimeter Gasraum (d.h. Volumen des Kühlkanal 23 plus Volumen der Bohrungen 24a-d). Während bspw. Natrium und Kalium mit Sauerstoff zu Oxiden reagieren, reagiert das Lithium mit Stickstoff zu Lithiumnitrid. Das Schutzgas wird somit praktisch vollständig als Feststoff im Kühlmittel 27 gebunden.

## Patentansprüche

1. Kolben (10) für einen Verbrennungsmotor, mit einem Kolbenkopf (11) und einem Kolbenschaft (16), wobei der Kolbenkopf (11) eine umlaufende Ringpartie (15) sowie im Bereich der Ringpartie (15) einen umlaufenden Kühlkanal (23) aufweist, wobei der Kolbenschaft (16) mit Nabenbohrungen (18) versehene Kolbennaben (17) aufweist, die über Nabenanbindungen (19) an der Unterseite (11 a) des Kolbenkopfes (11) angeordnet sind, wobei die Kolbennaben (17) über Laufflächen (21, 22) miteinander verbunden sind, wobei mindestens eine nach außen verschlossene Bohrung (24a, 24b, 24c, 24d) vorgesehen ist, die zwischen einer Lauffläche (21, 22) und einer Nabenbohrung (18) angeordnet ist, wobei die mindestens eine Bohrung (24a, 24b, 24c, 24d) in den Kühlkanal (23) mündet, und wobei der Kühlkanal (23) und die mindestens eine Bohrung (24a, 24b, 24c, 24d) ein Kühlmittel (27) in Form eines niedrig schmelzenden Metalls oder einer niedrig schmelzenden Metalllegierung enthalten,
**dadurch gekennzeichnet,**
**dass** vier Bohrungen (24a, 24b, 24c, 24d) vorgesehen sind, die zwischen einer Lauffläche (21, 22) und einer Nabenbohrung (18) angeordnet sind.

2. Kolben nach Anspruch 1, **dadurch gekennzeichnet, dass** als niedrig schmelzendes Metall Natrium oder Kalium enthalten ist.

3. Kolben nach Anspruch1, **dadurch gekennzeichnet, dass** die niedrig schmelzende Metalllegierung aus der Gruppe umfassend Galinstan®-Legierungen, niedrig schmelzende Bismut-Legierungen und Natrium-Kalium-Legierungen ausgewählt ist.

4. Kolben nach Anspruch 1, **dadurch gekennzeichnet, dass** das Kühlmittel (27) Lithium und/oder Lithiumnitrid enthält.

5. Kolben nach Anspruch 1, **dadurch gekennzeichnet, dass** das Kühlmittel (27) Natriumoxide und/oder Kaliumoxide enthält.

6. Kolben nach Anspruch 1, **dadurch gekennzeichnet, dass** mindestens eine Bohrung (24a, 24b, 24c, 24d) mittels eines Verschlusselements (26) verschlossen ist.

7. Kolben nach Anspruch 6, **dadurch gekennzeichnet, dass** das Verschlusselement (26) in die Bohrung eingepresst oder mit dem Kolben verschweißt ist.

8. Kolben nach Anspruch 1, **dadurch gekennzeichnet, dass** das Kühlmittel (27) eine Füllhöhe bis zur halben Höhe des Kühlkanals (23) aufweist.

9. Kolben nach Anspruch 1, **dadurch gekennzeichnet, dass** das Kühlmittel (27) eine Füllmenge von 3% bis 5% des Volumens des Kühlkanals (23).

10. Kolben nach Anspruch 1, **dadurch gekennzeichnet, dass** er im Wesentlichen aus einem eisenbasierten Werkstoff besteht.

11. Kolben nach Anspruch 10, **dadurch gekennzeichnet, dass** der eisenbasierte Werkstoff ausgewählt ist aus der Gruppe umfassend ausscheidungshärtende Stähle, Vergütungsstähle, hochfestes Gusseisen und Gusseisen mit Lamellengraphit.

## Claims

1. Piston (10) for an internal combustion engine, with a piston head (11) and a piston skirt (16), whereby the piston head (11) has a circumferential ring section (15) as well as a circumferential cooling channel (23) in the region of the ring section (15), whereby the piston skirt (16) has piston bosses (17) provided with boss bores (18) and arranged via boss connections (19) on the underside (11 a) of the piston head (11), whereby the piston bosses (17) are interconnected via running surfaces (21,22), whereby there is provided at least one outwardly-closed bore (24a, 24b, 24c, 24d) arranged between a running surface (21,22) and a boss bore (18), whereby the at least one bore (24a, 24b, 24c, 24d) runs into the cooling channel (23), and whereby the cooling channel (23) and the at least one bore (24a,24b,24c,24d) contains a cooling medium (27) in the form of a low melting point metal or a low melting point metal alloy, **characterised in that**
four bores (24a,24b,24c,24d) are provided and are arranged between a running surface (21,22) and a boss bore (18).

2. Piston according to claim 1, **characterised in that** sodium or potassium is contained as low melting point metal.

3. Piston according to claim 1, **characterised in that** the low melting point metal alloy is selected from the group comprising Galinstan® alloys, low melting point Bismuth alloys and sodium-potassium alloys.

4. Piston according to claim 1, **characterised in that** the cooling medium (27) contains lithium and/or lithium nitride.

5. Piston according to claim 1, **characterised in that** the cooling medium (27) contains sodium oxide and/or potassium oxide.

6. Piston according to claim 1, **characterised in that** at least one bore (24a,24b,24c,24d) is closed by means of a closure element (26).

7. Piston according to claim 6, **characterised in that** the closure element (26) is pressed into the bore or welded with the piston.

8. Piston according to claim 1, **characterised in that** the cooling medium (27) has a fill level up to half of the height of the cooling channel (23).

9. Piston according to claim 1, **characterised in that** the cooling medium (27) has a filling amount of 3% to 5% of the volume of the cooling channel (23).

10. Piston according to claim 1, **characterised in that** it substantially comprises an iron-based material.

11. Piston according to claim 10, **characterised in that** the iron-based material is selected from the group comprising precipitation hardened steels, tempering steels, high strength cast iron and cast iron with lamellar graphite.

## Revendications

1. Piston (10) pour un moteur à combustion interne, comprenant une tête de piston (11) et une tige de piston (16), dans lequel la tête de piston (11) présente une partie annulaire (15) périphérique ainsi que, dans la zone de la partie annulaire (15), un canal de refroidissement (23) périphérique, dans lequel la tige de piston (16) présente des moyeux de piston (17) pourvus d'alésages de moyeu (18), lesquels sont disposés, par l'intermédiaire de systèmes d'attache de moyeu (19), au niveau du côté inférieur (11 a) de la tête de piston (11), dans lequel les moyeux de piston (17) sont reliés les uns aux autres par l'intermédiaire de surfaces mobiles (21, 22), dans lequel au moins un alésage (24a, 24b, 24c, 24d) fermé par rapport à l'extérieur est prévu, lequel est disposé entre une surface mobile (21, 22) et un alésage de moyeu (18), dans lequel l'au moins un alésage (24a, 24b, 24c, 24d) débouche dans le canal de refroidissement (23), et dans lequel le canal de refroidissement (23) et l'au moins un alésage (24a, 24b, 24c, 24d) contiennent un moyen de refroidissement (27) sous la forme d'un métal à point de fusion bas ou d'un alliage de métaux à point de fusion bas,
**caractérisé en ce**
**que** quatre alésages (24a, 24b, 24c, 24d) sont prévus, lesquels sont disposés entre une surface mobile (21, 22) et un alésage de moyeu (18).

2. Piston selon la revendication 1, **caractérisé en ce qu'**est contenu en tant que métal à point de fusion bas du sodium ou du potassium.

3. Piston selon la revendication 1, **caractérisé en ce que** l'alliage de métaux à point de fusion bas est choisi parmi le groupe comprenant des alliages Galinstan®, des alliages de bismuth à point de fusion bas et des alliages de sodium et de potassium.

4. Piston selon la revendication 1, **caractérisé en ce que** le moyen de refroidissement (27) contient du lithium et/ou du nitrure de lithium.

5. Piston selon la revendication 1, **caractérisé en ce que** le moyen de refroidissement (27) contient des oxydes de sodium et/ou des oxydes de potassium.

6. Piston selon la revendication 1, **caractérisé en ce qu'**au moins un alésage (24a, 24b, 24c, 24d) est fermé au moyen d'un élément de fermeture (26).

7. Piston selon la revendication 6, **caractérisé en ce que** l'élément de fermeture (26) est pressé dans l'alésage ou est soudé au piston.

8. Piston selon la revendication 1, **caractérisé en ce que** le moyen de refroidissement (27) présente une hauteur de remplissage jusqu'à la moitié de la hauteur du canal de refroidissement (23).

9. Piston selon la revendication 1, **caractérisé en ce que** le moyen de refroidissement (27) présente une quantité de remplissage allant de 3 % à 5 % du volume du canal de refroidissement (23).

10. Piston selon la revendication 1, **caractérisé en ce qu'**il est constitué sensiblement d'un matériau à base de fer.

11. Piston selon la revendication 10, **caractérisé en ce que** le matériau à base de fer est choisi parmi le groupe comprenant des aciers à durcissement par précipitation, des aciers de traitement, de la fonte hautement résistante et de la fonte comprenant du graphite lamellaire.
